(19) Europäisches Patentamt / European Patent Office / Office européen des brevets

(11) **EP 4 083 686 A1**

(12) **EUROPEAN PATENT APPLICATION**
published in accordance with Art. 153(4) EPC

(43) Date of publication:
**02.11.2022 Bulletin 2022/44**

(21) Application number: **20904668.9**

(22) Date of filing: **01.12.2020**

(51) International Patent Classification (IPC):
**G02C 7/02** (2006.01)

(52) Cooperative Patent Classification (CPC):
**G02C 7/02**

(86) International application number:
**PCT/JP2020/044737**

(87) International publication number:
**WO 2021/131541 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2019 JP 2019232743**

(71) Applicant: **Hoya Lens Thailand Ltd.**
**Pathumthani 12130 (TH)**

(72) Inventor: **WATANABE Takatsugu**
**Tokyo 160-8347 (JP)**

(74) Representative: **Betten & Resch**
**Patent- und Rechtsanwälte PartGmbB**
**Maximiliansplatz 14**
**80333 München (DE)**

(54) **SEMIFINISHED LENS AND METHOD FOR MANUFACTURING SPECTACLE LENS**

(57) A semi-finished lens includes an object-side surface and an eyeball-side surface and is to be an eyeglass lens completed by processing the eyeball-side surface. The object-side surface of the semi-finished lens includes an optical region and a non-optical region.

**FIG. 1**

EP 4 083 686 A1

**Description**

Technical Field

The present invention relates to a semi-finished lens that has an obj ect-side surface and an eyeball-side surface and is to be an eyeglass lens completed by processing the eyeball-side surface, and a method for manufacturing an eyeglass lens.

Background Art

Eyeglass lenses are usually broadly divided into finished lenses and semi-finished lenses. A finished lens refers to a lens whose object-side surface (usually, a convex surface) and eyeball-side surface (usually, a concave surface) are mirror optical surfaces that satisfy a prescription lens power, and whose optical surfaces do not require curving processing. Note that the object-side surface of the lens refers to a surface out of the surfaces that constitute the lens and is to be visible when the lens is worn as an eyeglass. Also, the eyeball-side surface of the lens refers to a surface out of the surfaces that constitute the lens and is located on the eyeball side of the wearer when the lens is worn as the eyeglass.

On the other hand, a semi-finished lens refers to a lens that has an object-side surface (usually, a convex surface) and an eyeball-side surface, and does not have a vision correction function, and only the object-side surface has a mirror-finished optical surface, and the eyeball-side surface is an unprocessed surface. The semi-finished lens is designed to have a lens thickness with a margin to be removed through processing such that the lens manufacturer can produce a lens having a vision correction function by performing surface processing (grinding, cutting, polishing, and the like) on the eyeball-side surface according to a lens prescription power.

Citation List

Patent Documents

     Patent Document 1: JP-2012-228806A
     Patent Document 2: JP-2014-182278A
     Patent Document 3: JP-2019-179219A

Summary of Invention

Technical Problem

In order to reduce the weight of an eyeglass lens so as to not burden the wearer of the eyeglass lens, conventionally, the eyeglass lens is designed in a shape such that the thickness of the frame edge (edge thickness) of the lens is minimized according to a value of the wearer's prescription and frame shape (e.g., see Patent Document 3).

However, because the frame edge thickness of the lens is minimized, a peripheral edge portion of a semi-finished lens may be cut during lens processing. In particular, cuts (also referred to as "knife edges") are likely to occur in the peripheral edge portion of the semi-finished lens with a positive power or astigmatism prescription while the semi-finished lens is being processed, and the lens may crack during processing.

Also, in a step of polishing the eyeball-side surface of the semi-finished lens, when the entire object-side surface of the lens is fixed through blocking for fixing the semi-finished lens, a blocking material is cut together with the lens while a processing surface is being cut, which causes the problem of having to dispose of waste generated during lens processing. On the other hand, in order to prevent the blocking material from being cut, if the semi-finished lens is fixed at the minimum required blocking diameter, an unfixed area outside the blocking diameter includes a peripheral portion of the frame. Thus, machining accuracy cannot be ensured, resulting in the issue of the resulting surface being optically unstable.

Also, a defective portion being formed due to a cut in the peripheral edge portion of the lens is problematic after the lens is polished. When surface treatment such as antireflection coating or hard coating is to be performed on the convex surface or concave surface of the lens, for example, the outer peripheral shape of the lens may not match the shape of a lens holding tool. Therefore, a problem arises in the surface treatment step, such as surface treatment being performed on a surface that originally does not require surface treatment.

Conventional Patent Document 1 discloses a method for manufacturing a plastic lens for an eyeglass having a structure in which a lens side surface has a groove portion pinched inward and the shape of a cross section in a plan view that intersects the groove portion is non-circular.

Also, conventional Patent Document 2 discloses an eyeglass lens base member (semi-finished lens) constituted by a lens main portion having two lens surfaces formed in a rectangular shape when viewed in the direction of an optical axis and a relatively thin edge portion that protrudes laterally from the lens main portion.

The plastic lens for an eyeglass obtained using the manufacturing method disclosed in Patent Document 1 above has the effect of being able to reduce waste that is generated in the eyeglass manufacturing step. However, it is not possible to avoid the above-described issues, that is, the occurrence of cuts in the peripheral edge portion of the lens in the step of processing the semi-finished lens.

Furthermore, cuts are likely to occur in a thin edge portion of the eyeglass lens base member with the structure disclosed in Patent Document 2 above when the eyeball-side surface is processed, and thus the above-described issues cannot also be resolved.

In view of this, the present invention was made to resolve such conventional issues, and an object thereof is to provide a semi-finished lens with which it is possible to prevent the peripheral edge portion of the lens from being cut during lens processing.

Solution to Problem

As a result of intensive studies to resolve the above issues, the inventors of the present invention found that the issues can be resolved by the invention having the following configurations. That is, the present invention has the following configuration in order to resolve the issues.

(Configuration 1)

A semi-finished lens that has an object-side surface and an eyeball-side surface and is to be an eyeglass lens completed by processing the eyeball-side surface,
in which the object-side surface includes an optical region and a non-optical region.

(Configuration 2)

The semi-finished lens according to Configuration 1,
in which the non-optical region is a cutting allowance for when the eyeglass lens is processed.

(Configuration 3)

The semi-finished lens according to Configuration 1 or 2,
in which the non-optical region includes at least a portion of an outer edge portion of the semi-finished lens.

(Configuration 4)

The semi-finished lens according to any one of Configurations 1 to 3,

in which the optical region has an optical surface having a predetermined design shape, and the non-optical region has a design shape that is different from that of the optical surface, and
the optical region and the non-optical region are in contact with each other continuously or discontinuously at a boundary.

(Configuration 5)

The semi-finished lens according to any one of Configurations 1 to 4,

in which the amount of sag in a vertical direction of the optical region increases from the center of the semi-finished lens to a peripheral edge of the semi-finished lens, and
the amount of sag in a vertical direction of the non-optical region is constant or increases from the center of the semi-finished lens to the peripheral edge of the semi-finished lens at a smaller ratio than in the optical region.

(Configuration 6)

The semi-finished lens according to any one of Configurations 1 to 5,
in which curvature changes at the boundary between the optical region and the non-optical region.

(Configuration 7)

The semi-finished lens according to any one of Configurations 1 to 6,
in which the optical region and the non-optical region have different curvatures in at least one of a vertical direction and a horizontal direction.

(Configuration 8)

The semi-finished lens according to any one of Configurations 1 to 7,
in which curvature in a vertical direction of the optical region is larger than curvature in a vertical direction of the non-optical region.

(Configuration 9)

The semi-finished lens according to any one of Configurations 1 to 8,
in which curvature in a vertical direction of the non-optical region is different from curvature in a horizontal direction of the non-optical region.

(Configuration 10)

The semi-finished lens according to any one of Configurations 1 to 9,
in which curvature in a horizontal direction of the non-optical region is larger than curvature in a vertical direction of the non-optical region.

(Configuration 11)

The semi-finished lens according to any one of Configurations 1 to 10,
in which the shape of the optical region is set according to the shape of a frame.

(Configuration 12)

The semi-finished lens according to any one of Configurations 1 to 11,
in which a material of the semi-finished lens is plastic.

(Configuration 13)

A method for manufacturing an eyeglass lens having a lens power that corresponds to a prescription value of a lens, the method including:

a step of preparing a semi-finished lens having an object-side surface and an eyeball-side surface; and
a step of processing the eyeball-side surface of the semi-finished lens according to the prescription value of the lens,
in which the object-side surface of the semi-finished lens includes an optical region and a non-optical region that have different design shapes.

Advantageous Effects of Invention

According to the semi-finished lens of the present invention, it is possible to prevent a peripheral edge portion of the lens from being cut during lens processing.
Also, according to the semi-finished lens of the present invention, it is possible to prevent the peripheral edge portion of the lens from being cut during lens processing in such a manner, and thus it is possible to solve the above-described problem of having to dispose of waste generated during conventional lens processing and problems in the surface treatment step performed after lens processing is performed.

Brief Description of Drawings

FIG. 1 is a plan view showing a first embodiment of a semi-finished lens according to the present invention.
FIG. 2 is a side view of the semi-finished lens when viewed in a direction indicated by arrow A in FIG. 1.
FIG. 3 is a side view of the semi-finished lens when viewed in a direction indicated by arrow B in FIG. 1.
FIG. 4 is a graph showing an example of a change in the amount of sag in the vertical direction of the semi-finished lens 1 of the first embodiment.
FIG. 5 is a graph showing an example of a change in the amount of sag in the vertical direction of the semi-finished lens 1 of the first embodiment.
FIG. 6 is a plan view showing a second embodiment of the semi-finished lens according to the present invention.
FIG. 7 is a perspective view of the entire second embodiment.
FIG. 8 is a side view of the semi-finished lens when viewed in a direction indicated by arrow A in FIG. 6.
FIG. 9 is a side view of the semi-finished lens when viewed in a direction indicated by arrow B in FIG. 6.
FIG. 10 is a plan view showing a third embodiment of the semi-finished lens according to the present invention.

Description of Embodiments

Hereinafter, embodiments according to the present invention will be described in detail with reference to the drawings.

[First Embodiment]

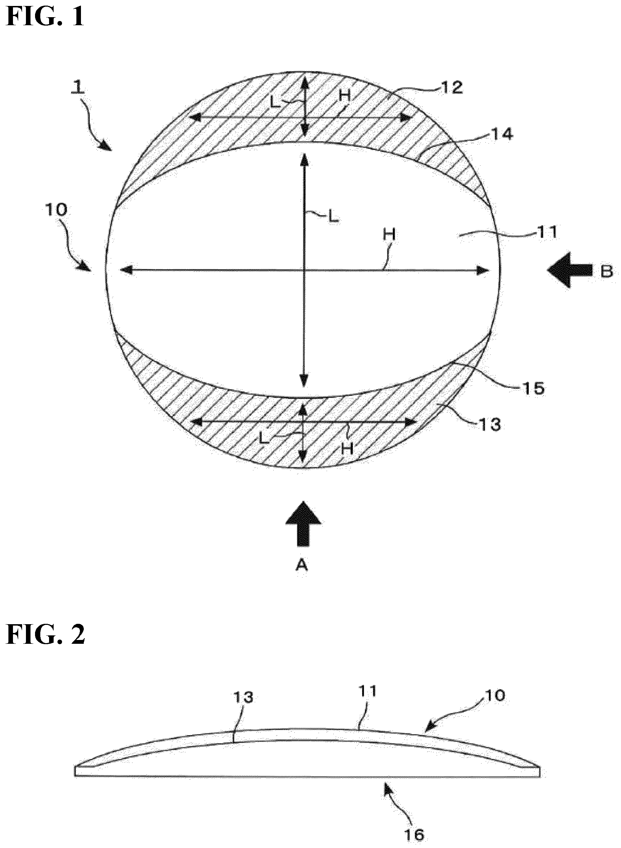

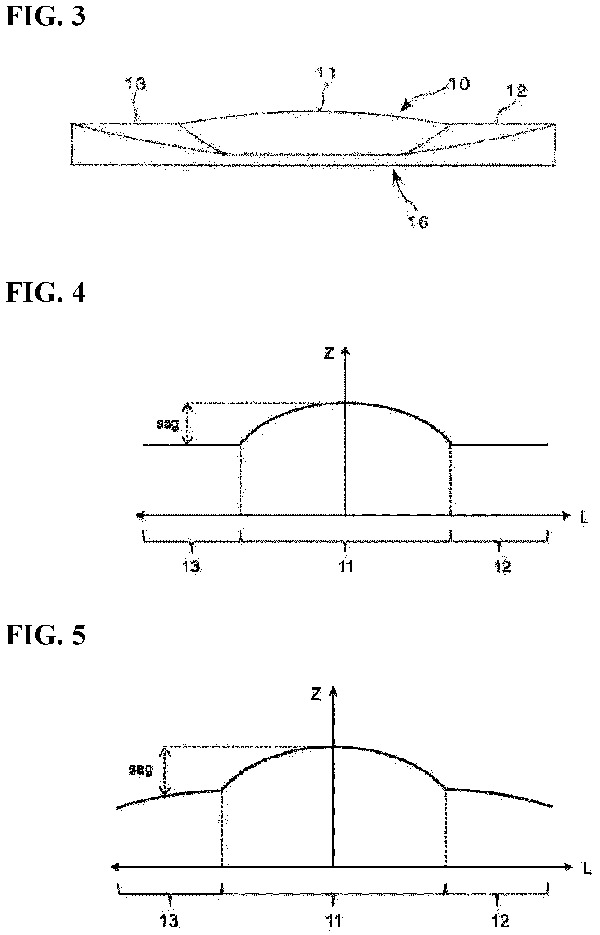

FIG. 1 is a plan view showing a first embodiment of a semi-finished lens according to the present invention. FIG. 2 is a side view of the semi-finished lens when viewed in a direction indicated by arrow A in FIG. 1. Furthermore, FIG. 3 is a side view of the semi-finished lens when viewed in a direction indicated by arrow B in FIG. 1.

The semi-finished lens has an object-side surface (usually, a convex surface) and an eyeball-side surface, and only the object-side surface has a mirror-finished optical surface, and the eyeball-side surface is an unprocessed surface. A completed eyeglass lens having a vision correction function can be obtained as a result of the lens manufacturer performing surface processing (grinding, cutting, polishing, and the like) on the eyeball-side surface such that the lens has a desired lens power that corresponds to a lens prescription value. It is possible to obtain an eyeglass lens having only a concave surface on the eyeball side, or an eyeglass lens having a concave surface in which a portion thereof includes a convex surface, for example.

Plastics are mainly used as the material of the eyeglass lens, and plastics are also preferably used as the material of the semi-finished lens according to the present invention. Specifically, it is possible to use various base members that are usually used as plastic lenses, and to manufacture lenses by injecting a lens monomer into a lens forming mold and performing curing treatment thereon.

There is no particular limitation on the lens monomer, and it is possible to use various types of monomers that are usually used to manufacture plastic lenses. It is possible to use a monomer having a benzene ring, a naphthalene ring, an ester bond, a carbonate bond, or a urethane bond, in its molecule, and the like, for example. Also, it is possible to use compounds having a sulfur or halogen element, and in particular, it is also possible to use compounds having a nuclear halogenated aromatic ring. A lens monomer can be manufactured using one, or two or more types of monomers having the above functional groups. Examples thereof include styrene, divinylbenzene, phenyl (meth)acrylate, benzyl (meth)acrylate, naphthyl (meth)acrylate, methyl (meth)acrylate, diethylene glycol bis(allyl carbonate), diallyl (iso)phthalate, dibenzyl itaconate, dibenzyl fumarate, chlorostyrene, nuclear halogenated styrene, nuclear halogenated phenyl (meth)acrylate, nuclear halogenated benzyl (meth)acrylate, tetrabromobisphenol A derivative (di)(meth)acrylate, tetrabromobisphenol A derivative diallyl carbonate, diorthochlorobenzyl itaconate, diorthochlorobenzyl fumarate, diethylene glycol bis(orthochlorobenzyl) fumarate, (di)ethylene glycol di(meth)acrylate, glycidyl methacrylate, products obtained through reactions with polyfunctional isocyanate, such as xylylene diisocyanate and hexamethylene diisocyanate, products obtained through reactions between nuclear halogenated phenol derivative monohydroxy acrylate and polyfunctional isocyanate, products obtained through reactions between nuclear halogenated biphenyl derivative monohydroxy acrylate and polyfunctional isocyanate, products obtained through reactions between xylene diisocyanate and polyfunctional mercaptan, products obtained through reactions between glycidyl methacrylate and polyfunctional methacrylate, and the like, and mixtures thereof. Examples of the material of the lens base member preferably include polyurethane-based materials such as a polythiourethane resin and a polyurethane resin, epithio-based materials such as a polysulfide resin, polycarbonate-based materials, and diethylene glycol bis(allyl carbonate)-based materials.

Although colorless semi-finished lenses are usually used as the above semi-finished lens, depending on the purpose and application, colored semi-finished lenses can be used as long as transparency is not impaired.

The semi-finished lens according to the present invention is a semi-finished lens that is to be an eyeglass lens that has an object-side surface and an eyeball-side surface and is completed by processing the eyeball-side surface as described in the above configuration 1, and the object-side surface includes an optical region and a non-optical region.

As shown in FIG. 1, in a semi-finished lens 1 according to the first embodiment, an object-side surface 10 includes an optical region 11 and non-optical regions 12 and 13. Note that FIG. 1 is a plan view, and the non-optical regions 12 and 13 are hatched for clarity in FIG. 1.

The non-optical regions 12 and 13 include at least a portion of an outer edge portion of the semi-finished lens 1. The semi-finished lens 1 of this embodiment includes the non-optical region 12 on the upper edge portion side of the optical region 11 having an elliptical shape in a plan view and the non-optical region 13 on the lower edge portion side. Overall, the object-side surface 10 has a circular shape.

As referred to in FIG. 1, when the object-side surface 10 of the semi-finished lens 1 is viewed in a plan view, the non-optical regions 12 and 13 are formed as two regions that are arranged at opposing positions with the optical region 11 interposed therebetween. Although the non-optical regions 12 and 13 form a round columnar surface shape, for example, there is no particular limitation on the shapes thereof as long as their shapes can ensure the strength at which it is possible to obtain the effect of preventing the peripheral edge portion of the lens from being cut during lens processing.

The optical region 11 is an optically effective convex surface that has been mirror-processed and optically finished. Also, while the optical region 11 is a region that is always larger than the shape of a frame to which the lens is to be mounted, the non-optical regions 12 and 13 are located outward of the frame shape, and are optically ineffective surfaces. Note that, although the eyeball-side surface 16 of the semi-finished lens 1 is flat in this embodiment (see FIGS. 2 and 3), for example, the eyeball-side surface 16 may be a concave surface or a convex surface.

In the semi-finished lens 1 according to this embodiment, the optical region 11 has an optical surface having a predetermined design shape (i.e., a shape that is based on the prescription of an eyeglass lens or a shape that is based on a presumed prescription). On the other hand, the non-optical regions 12 and 13 each have a design shape that is different from that of the optical surface (i.e., a shape that is not related to the prescription of the eyeglass lens). A "design shape" refers to a shape determined based on a design. Also, the optical region 11 and the non-optical regions 12 and 13 can be in contact with each other continuously or discontinuously at boundaries 14 and 15.

A "vertical direction" and a "horizontal direction" are defined as follows in the present invention. When the optical region of the semi-finished lens is made conforming to a frame (eyeglass frame), the "horizontal direction" refers to a direction extending along the horizontal width (size A) of the frame, and the "vertical direction" refers to a direction extending along the vertical width (size B) of the frame. Here, the size A and the size B are frame size defined in JIS and ISO standards, and respectively refer to size A and size B in the boxing system.

Therefore, in the plan view in FIG. 1, the direction indicated by arrow L is the "vertical direction" and the direction indicated by arrow H is the "horizontal direction". Also, in this specification, the vertical direction may be expressed as an up-down direction, and the horizontal direction may be expressed as a left-right direction.

FIGS. 4 and 5 are graphs showing examples of a change in the amount of sag in the vertical direction of the semi-finished lens 1 of this embodiment. Note that, in this specification, the sag amount refers to the difference between the Z-coordinate (the coordinate in the thickness direction) of the object-side surface 10 at the lens center and the Z-coordinate of the object-side surface 10 at a specific position.

As shown in FIGS. 4 and 5, the amount of sag in the vertical direction of the optical region 11 increases from the center to the peripheral edge of the semi-finished lens 1. On the other hand, it is preferable that, as shown in FIG. 4, the amounts of sag in the vertical direction of the non-optical regions 12 and 13 are constant, or, as shown in FIG. 5, increase from the center to the peripheral edge of the semi-finished lens 1 at a smaller ratio than in the optical region 11. Accordingly, the thickness and the area of the non-optical regions 12 and 13 can be secured with ease, and thus it is possible to more remarkably obtain the effect of preventing the peripheral edge portion of the lens from being cut during lens processing.

The curvature of the semi-finished lens 1 according to this embodiment changes at the boundary 14 between the optical region 11 and the non-optical region 12 of the object-side surface 10 and the boundary 15 between the optical region 11 and the non-optical region 13. That is, the curvature changes at the boundary 14 from the curvature value of the optical region 11 to the curvature value of the non-optical region 12, and changes at the boundary 15 from the curvature value of the optical region 11 to the curvature value of the non-optical region 13. As referred to in FIG. 3, the curvature value may change discontinuously or continuously.

Incidentally, curvature indicates an amount that usually expresses the degree of bending of a curved line or curved surface, and the value of a base curve can be used as an index with the magnitude of curvature, for example. With an eyeglass lens, an object-side refracting surface of the lens is referred to as a "base curve". This is because the shape of the object-side refracting surface of the eyeglass lens is determined first, and then the shape and the center thickness of the eyeball-side refracting surface are determined based on the thus determined shape. The value of the base curve is represented by the refractive power of the surface of the lens. Usually, the refractive power of the surface of the lens with a refractive index n can be calculated using the following equation.

$$\text{Refractive power of surface D [diopters]} = (n - 1) / R$$

where R indicates the radius of curvature of the refracting surface, and thus the unit is m [meter].

Therefore, the larger the value of the base curve is, the larger the curvature of a curved surface is, and the smaller the value of the base curve is, the smaller the curvature of a curved surface is. Also, when the value of a base curve is "0 (zero)", the surface is flat.

In this embodiment, the optical region 11 and the non-optical regions 12 and 13 have different curvatures in at least one of the vertical direction and the horizontal direction.

Also, in this embodiment, the curvature in the vertical direction of the optical region 11 is preferably larger than the curvature in the vertical direction of the non-optical regions 12 and 13. Accordingly, the thickness and the area of the non-optical regions 12 and 13 can be secured with ease, and thus it is possible to more remarkably obtain the effect of preventing the peripheral edge portion of the lens from being cut during lens processing.

Also, in this embodiment, the curvature in the vertical direction of the non-optical regions 12 and 13 is preferably different from the curvature in the horizontal direction thereof. A configuration can be adopted in which the curvature in the horizontal direction of the non-optical regions 12 and 13 is larger than the curvature in the vertical direction thereof, for example. The curvature in the vertical direction of the non-optical regions 12 and 13 may be zero. By making the eyeball-side surface 16 a concave surface, the lens thickness at any position in the non-optical regions 12 and 13 can be larger than the smallest thickness at the boundaries 14 and 15 between the optical region 11 and the non-optical regions 12 and 13, for example.

With the semi-finished lens 1 according to this embodiment, the curvature in the vertical direction of the optical region 11 is base curve 5, and the curvature in the horizontal direction is also base curve 5, for example. Note that "base curve" is abbreviated as "BC" hereinafter.

Also, the curvature in the vertical direction of the non-optical regions 12 is BC0 (zero), and the curvature in the horizontal direction is BC4. Also, the curvature in the vertical direction of the non-optical regions 13 is BC0 (zero), and the curvature in the horizontal direction is BC4.

The above curvature values are merely examples, and the curvature values are not limited to these values, and may be optimized according to a frame shape, lens prescription values, and the like.

As described above, the semi-finished lens 1 according to this embodiment includes the optically ineffective non-optical regions 12 and 13 that are located on the upper and lower sides of and adjacent to the optical region 11. The optical region 11 is larger than the shape of the frame to which an eyeglass lens is to be ultimately mounted, and the non-optical regions 12 and 13 are outside the frame when the lens is mounted to the frame. Also, preferably, for the optical region 11 and the non-optical regions 12 and 13, the values of curvature in the vertical direction and the horizontal direction are adjusted as described above.

The shape of the optical region 11 is basically set according to the shape of the frame. The shape of a frame here includes not only the shape of a frame when a specific frame to which a lens is to be mounted is determined but also multiple types of frames whose various shapes are roughly determined in advance based on their characteristics. Also, how to set the curvature (base curve) of the optical region 11, that is, how a semi-finished lens is to be selected according to base curve, is usually determined by the prescription value, frame shape, lens layout, wearing parameters, and the like.

Note that the optical region 11 may be a bifocal lens having a small round lens at its lower portion or a progressive addition lens, for example. In the case of a bifocal lens, a portion of a small round lens that is to be outside the frame may be lost due to the non-optical region 13. Also, with regard to a progressive addition lens, usually, a lower region includes a near-portion region (near portion) and a progressive-portion region (intermediate region), and an upper region includes a distance-portion region (distance portion). However, a portion of the distance portion or the near portion that is to be outside the frame may be lost due to the non-optical regions 12 and 13.

According to the semi-finished lens 1 of this embodiment, a cutting allowance can be provided by providing the optically ineffective non-optical regions 12 and 13 that are located on the upper and lower sides of and adj acent to the optical region 11, and thus, even when the thickness of a lens edge is optimized for the frame shape, it is possible to prevent the peripheral edge portion of the lens from being cut during lens processing, regardless of the prescription power and frame shape of the eyeglass wearer, and the like.

Also, it is possible to prevent the peripheral edge portion of the lens from being cut during such lens processing, and the outer diameter of the lens is maintained because no defective portion results from the peripheral edge portion of the lens being cut. Thus, when surface treatment such as antireflection coating or hard coating is performed on a convex surface or a concave surface of the polished lens, the outer peripheral shape of the lens matches the shape of the lens holding tool, and thus it is possible to resolve the above-described conventional issues arising in a surface treatment step performed after lens processing is performed. Also, even if blocking is performed at a blocking diameter with which the entire frame is covered during lens processing, there is no need to cut a blocking material at an outer peripheral portion of the lens, which is to be a portion outside the frame, and waste disposal is facilitated during the above-described conventional lens processing. Furthermore, blocking can be performed according to the outer diameter of a semi-finished lens, and the types of block rings used in blocking can be reduced, regardless of the size of the frame.

A conventional semi-finished lens does not have a cutting allowance so as to provide versatility such that the semi-finished lens can take various frame shapes. In contrast, in the present invention, frame shapes are narrowed in advance, and a cutting allowance (non-optical region) for when an eyeglass lens is processed is provided. Accordingly, it is possible to prevent the peripheral edge portion of the lens from being cut during lens processing. That is, in the present invention, at the cost of versatility, it is possible to prevent the edge portion from being cut when processing is performed, compared to conventional semi-finished lenses. When eyeglass lenses whose frame shapes are narrowed down to some extent are to be manufactured, the semi-finished lens according to the present invention can be suitably used.

[Second Embodiment]

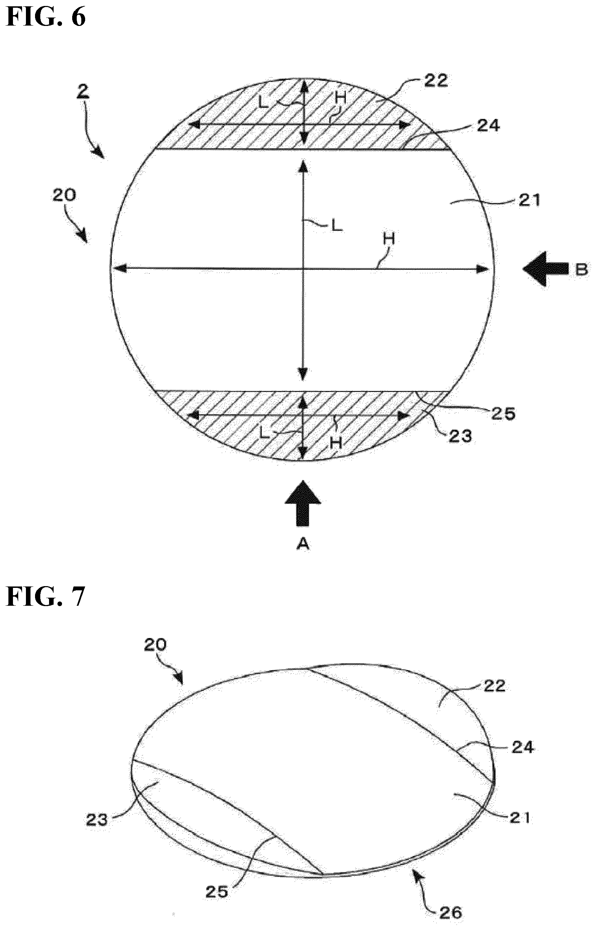

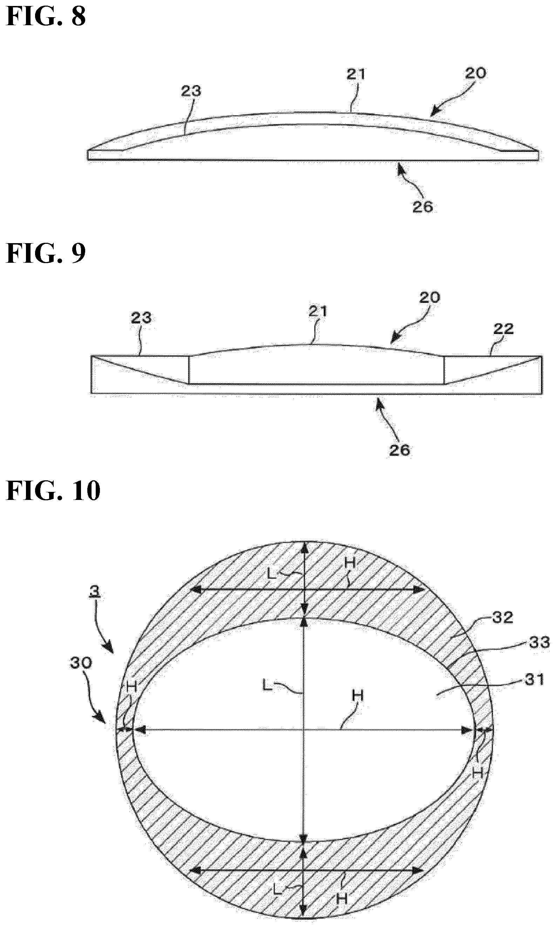

FIG. 6 is a plan view showing a second embodiment of the semi-finished lens of the present invention, and FIG. 7 is the perspective view of the entire second embodiment. Also, FIG. 8 is a side view of the semi-finished lens when viewed in the direction indicated by arrow A in FIG. 6, and FIG. 9 is a side view of the semi-finished lens when viewed in the direction indicated by arrow B in FIG. 6.

As shown in FIG. 6, the object-side surface 20 of a semi-finished lens 2 according to the second embodiment includes an optical region 21 and non-optical regions 22 and 23. Note that FIG. 6 is a plan view and the non-optical regions 22 and 23 are hatched to facilitate comprehension of them in FIG. 6.

The non-optical regions 22 and 23 each includes at least a portion of the outer edge portion of the semi-finished lens 2. The semi-finished lens 2 of this embodiment includes the non-optical region 22 on the upper edge portion side of the optical region 21 having a barrel shape in a plan view, and the non-optical region 23 on the lower edge portion side thereof, and overall, the object-side surface 20 has a circular shape.

As referred to in FIG. 6, when the object-side surface 20 of the semi-finished lens 2 is viewed in a plan view, the non-optical regions 22 and 23 are formed as two regions arranged at opposing positions with the optical region 21 interposed therebetween. The non-optical regions 22 and 23 form a round columnar surface shape, for example. There is no particular limitation on the shapes thereof as long as their shapes can ensure the strength at which it is possible to obtain the effect of preventing the peripheral edge portion of the lens from being cut during lens processing.

In this embodiment, the optical region 21 is also an optically effective convex surface that has been mirror-processed and optically finished. Also, while the optical region 21 is a region that is always larger than the shape of a frame to which the lens is to be mounted, the non-optical regions 22 and 23 are located outward of the frame shape, and are optically ineffective surfaces. Note that, although the eyeball-side surface 26 of the semi-finished lens 2 is flat in this embodiment (see FIGS. 8 and 9), for example, the eyeball-side surface 26 may be a concave surface or a convex surface.

In the semi-finished lens 2 according to this embodiment, the optical region 21 has an optical surface having a predetermined design shape (i.e., a shape that is based on the prescription of an eyeglass lens or a shape that is based on a presumed prescription). On the other hand, the non-optical regions 22 and 23 each have a design shape that is different from that of the optical surface (i.e., a shape that is not related to the prescription of the eyeglass lens). A "design shape" refers to a shape determined based on a design. Also, the optical region 21 and the non-optical regions 22 and 23 can be in contact with each other continuously or discontinuously at boundaries 24 and 25.

Although not shown, in this embodiment as well, the amount of sag in the vertical direction of the optical region 21 increases from the center to the peripheral edge of the semi-finished lens 2. On the other hand, it is preferable that the amounts of sag in the vertical direction of the non-optical regions 22 and 23 are constant, or increase from the center to the peripheral edge of the semi-finished lens 2 at a smaller ratio than in the optical region 21. Accordingly, the thickness and the area of the non-optical regions 22 and 23 can be secured with ease, and thus it is possible to more remarkably obtain the effect of preventing the peripheral edge portion of the lens from being cut during lens processing.

With the semi-finished lens 2 according to this embodiment, curvature changes at a boundary 24 between the optical region 21 and the non-optical region 22 of the object-side surface 20 and a boundary 25 between the optical region 21 and the non-optical region 23. That is, the curvature changes at the boundary 24 from the curvature value of the optical region 21 to the curvature value of the non-optical region 22, and changes at the boundary 25 from the curvature value of the optical region 21 to the curvature value of the non-optical region 23. As referred to in FIG. 9, the curvature value may change discontinuously or continuously.

In this embodiment, the optical region 21 and the non-optical regions 22 and 23 also have different curvatures in at least one of the vertical direction and the horizontal direction.

Also, in this embodiment, the curvature in the vertical direction of the optical region 21 is preferably larger than the curvature in the vertical direction of the non-optical regions 22 and 23. Accordingly, the thickness and the area of the non-optical regions 22 and 23 can be secured with ease, and thus it is possible to more remarkably obtain the effect of preventing the peripheral edge portion of the lens from being cut during lens processing.

Also, in this embodiment, the curvature in the vertical direction of the non-optical regions 22 and 23 is also preferably different from the curvature in the horizontal direction thereof. A configuration can be adopted in which the curvature in the horizontal direction of the non-optical regions 22 and 23 is larger than the curvature in the vertical direction thereof, for example. The curvature in the vertical direction of the non-optical regions 22 and 23 may be zero. The lens thickness at any position in the non-optical regions 22 and 23 can be larger than the smallest thickness at the boundaries 24 and 25 between the optical region 21 and the non-optical regions 22 and 23.

With the semi-finished lens 2 according to this embodiment, the curvature in the vertical direction of the optical region 21 is BC5, and the curvature in the horizontal direction is also BC5, for example.

Also, the curvature in the vertical direction of the non-optical region 22 is larger than BC0 (zero) and less than BC5, and the curvature in the horizontal direction is BC5. Also, the curvature in the vertical direction of the non-optical region 23 is larger than BC0 (zero) and less than BC5, and the curvature in the horizontal direction is BC5.

The above curvature values are merely examples, and the curvature values are not limited to these values, and may be optimized according to a frame shape, lens prescription values, and the like.

As described above, the semi-finished lens 2 according to this embodiment includes the optically ineffective non-optical regions 22 and 23 that are located on the upper and lower sides of and adjacent to the optical region 21 that is larger than a frame shape. Also, preferably, for the optical region 21 and the non-optical regions 22 and 23, the values of curvature in the vertical direction and the horizontal direction are adjusted as described above.

The semi-finished lens 2 of this embodiment also has the same effects as the semi-finished lens 1 of the above-described first embodiment. That is, according to the semi-finished lens 2 of this embodiment, a cutting allowance can be provided by providing the optically ineffective non-optical regions 22 and 23 that are located on the upper and lower sides of and adjacent to the optical region 21, and thus, even when the thickness of a lens edge is optimized for the frame shape, it is possible to prevent the peripheral edge portion of the lens from being cut during lens processing, regardless of the prescription power and frame shape of the eyeglass wearer, and the like. Also, it is possible to prevent the peripheral edge portion of the lens from being cut during such lens processing, and the outer diameter of the lens is maintained. Thus, no problem arises in the surface treatment step performed after conventional lens processing described above is performed. It is also possible to solve the above-described problem of having to dispose of waste generated during the conventional lens processing.

[Third Embodiment]

FIG. 10 is a plan view showing a third embodiment of the semi-finished lens of the present invention.

As shown in FIG. 10, an object-side surface 30 of a semi-finished lens 3 according to the third embodiment includes an optical region 31 and a non-optical region 32. Note that FIG. 10 is a plan view and the non-optical region 32 is hatched to facilitate comprehension of the non-optical region 32 in FIG. 10.

The semi-finished lens 3 of this embodiment includes the non-optical region 32 in a peripheral edge portion of the optical region 31 having an elliptical shape in a plan view, and overall, the object-side surface 30 has a circular shape. In this embodiment, the optical region 31 is also an optically effective convex surface that has been mirror-processed and optically finished. Also, while the optical region 31 is a region that is always larger than the shape of a frame, the non-optical region 32 is an optically ineffective surface outward of the frame shape.

Note that, although the eyeball-side surface of the semi-finished lens 3 is not shown, the eyeball-side surface may be a flat surface, concave surface, or a convex surface, for example.

In the semi-finished lens 3 according to this embodiment, the optical region 31 has an optical surface having a predetermined design shape (i.e., a shape that is based on the prescription of an eyeglass lens or a shape that is based on a presumed prescription). The non-optical region 32 has a design shape that is different from that of the optical surface (i.e., a shape that is not related to the prescription of the eyeglass lens). A "design shape" refers to a shape determined based on a design. Also, the optical region 31 and the non-optical region 32 can be in contact with each other continuously or discontinuously at a boundary 33.

In the semi-finished lens 3 of this embodiment, the non-optical region 32 is located so as to surround the optical region 31. That is, unlike the first and second embodiments, the non-optical region 32 is also arranged in the left-right direction of the optical region 31. Accordingly, it is possible to prevent the peripheral edge portion of the lens from being cut in multiple directions.

Although not shown, in this embodiment as well, the amount of sag in the vertical direction of the optical region 31 increases from the center to the peripheral edge of the semi-finished lens 3. On the other hand, it is preferable that the amount of sag in the vertical direction of the non-optical region 32 is constant, or increases from the center to the peripheral edge of the semi-finished lens 3 at a smaller ratio than in the optical region 31. Accordingly, the thickness and the area of the non-optical region 32 can be secured with ease, and thus it is possible to more remarkably obtain the effect of preventing the peripheral edge portion of the lens from being cut during lens processing.

With the semi-finished lens 3 according to this embodiment, curvature changes at the boundary 33 between the optical region 31 and the non-optical region 32 of the object-side surface 30. That is, the curvature changes at the boundary 33 from the curvature value of the optical region 31 to the curvature value of the non-optical region 32. The curvature value may change discontinuously or continuously.

In this embodiment as well, the optical region 31 and the non-optical region 32 also have different curvatures in at least one of the vertical direction and the horizontal direction.

Also, in this embodiment as well, the curvature in the vertical direction of the optical region 31 is preferably larger than the curvature in the vertical direction of the non-optical region 32. Accordingly, the thickness and the area of the non-optical region 32 can be secured with ease, and thus it is possible to more remarkably obtain the effect of preventing the peripheral edge portion of the lens from being cut during lens processing.

Also, in this embodiment, the curvature in the vertical direction of the non-optical region 32 located in the peripheral edge portion of the optical region 31 is also preferably different from the curvature in the horizontal direction thereof. A configuration can be adopted in which the curvature in the horizontal direction of the non-optical region 32 is larger than the curvature in the vertical direction thereof, for example. The curvature in the vertical direction of the non-optical region 32 may be zero. The lens thickness at any position in the non-optical region 32 can be larger than the smallest thickness at the boundary 33 between the optical region 31 and the non-optical region 32.

With the semi-finished lens 3 according to this embodiment, the curvature in the vertical direction of the optical region 31 is BC5, and the curvature in the horizontal direction is also BC5, for example.

Also, the curvature in the vertical direction of the non-optical region 32 located in a peripheral edge portion of the optical region 31 is BC0 (zero), and the curvature in the horizontal direction is BC3.

The above curvature values are merely examples, and the curvature values are not limited to these values, and may be optimized according to a frame shape, lens prescription values, and the like.

As described above, in the semi-finished lens 3 of this embodiment, the optically ineffective non-optical region 32 is provided outside the optical region 31 that is larger than the frame shape, along the outer edge portion of the semi-finished lens 3. Also, preferably, for the optical region 31 and the non-optical region 32, the values of curvature in the vertical direction and the horizontal direction are adjusted as described above.

The semi-finished lens 3 of this embodiment also has the same effects as the semi-finished lens 1 of the above-described first embodiment. That is, according to the semi-finished lens 3 of this embodiment, a cutting allowance can be provided by providing the optically ineffective non-optical region 32 at the peripheral edge portion of the optical region 31, and thus, even when the thickness of a lens edge is optimized for the frame shape, it is possible to prevent the peripheral edge portion of the lens from being cut during lens processing, regardless of the prescription power and frame shape of the eyeglass wearer, and the like. Also, it is possible to prevent the peripheral edge portion of the lens from being cut during lens processing in this manner, and thus, the outer diameter of the lens is maintained. Thus, no problem arises in the surface treatment step performed after conventional lens processing described above is performed. Furthermore, it is also possible to solve the above-described conventional problem of having to dispose of waste generated during lens processing.

Although the semi-finished lens according to the present invention was described above in detail using the first to third embodiments, the present invention is not limited to these embodiments.

A non-optical region may have a spherical or an aspherical surface, and may have a round columnar surface or an astigmatic surface (toric surface), for example. Furthermore, the non-optical region may be a region that includes a combination of these surfaces. Also, the non-optical region may include a flat surface.

Furthermore, although the non-optical regions 12 and 13 of the semi-finished lens 1 are formed as two regions that are located at opposing positions with the optical region 11 interposed therebetween in the first embodiment, the number of non-optical regions need not be two, and may be one, for example. The same applies to the second embodiment.

Furthermore, the invention of this application includes a method for manufacturing an eyeglass lens.

That is, a method for manufacturing an eyeglass lens having a lens power that corresponds to a prescription value of the lens includes a step of preparing a semi-finished lens having an object-side surface and an eyeball-side surface and a step of processing the eyeball-side surface of the semi-finished lens according to the prescription value of the lens. The object-side surface of the semi-finished lens includes an optical region and a non-optical region that have different design shapes. The semi-finished lens prepared using this manufacturing method can have favorable characteristics of the semi-finished lenses according to the above embodiments.

Reference Signs List

| | |
|---|---|
| 1 | Semi-finished lens |
| 10 | Object-side surface |
| 11 | Optical region |
| 12, 13 | Non-optical region |
| 14, 15 | Boundary (between optical region and non-optical region) |
| 16 | Eyeball-side surface |
| 2 | Semi-finished lens |
| 20 | Object-side surface |
| 21 | Optical region |
| 22, 23 | Non-optical region |
| 24, 25 | Boundary (between optical region and non-optical region) |
| 26 | Eyeball-side surface |
| 3 | Semi-finished lens |
| 30 | Object-side surface |
| 31 | Optical region |
| 32 | Non-optical region |
| 33 | Boundary (between optical region and non-optical region) |
| L | Vertical direction |
| H | Horizontal direction |

**Claims**

1. A semi-finished lens that includes an object-side surface and an eyeball-side surface and is to be an eyeglass lens completed by processing the eyeball-side surface,
   wherein the object-side surface includes an optical region and a non-optical region.

2. The semi-finished lens according to claim 1,
   wherein the non-optical region is a cutting allowance for when the eyeglass lens is processed.

3. The semi-finished lens according to claim 1 or 2,
   wherein the non-optical region includes at least a portion of an outer edge portion of the semi-finished lens.

4. The semi-finished lens according to any one of claims 1 to 3,
   wherein the optical region has an optical surface having a predetermined design shape, and the non-optical region has a design shape that is different from that of the optical surface, and
   the optical region and the non-optical region are in contact with each other continuously or discontinuously at a boundary.

5. The semi-finished lens according to any one of claims 1 to 4,
   wherein the amount of sag in a vertical direction of the optical region increases from the center of the semi-finished lens to a peripheral edge of the semi-finished lens, and
   the amount of sag in a vertical direction of the non-optical region is constant, or increases from the center of the semi-finished lens to the peripheral edge of the semi-finished lens at a smaller ratio than in the optical region.

6. The semi-finished lens according to any one of claims 1 to 5,
   wherein curvature changes at a boundary between the optical region and the non-optical region.

7. The semi-finished lens according to any one of claims 1 to 6,
   wherein the optical region and the non-optical region have different curvatures in at least one of a vertical direction and a horizontal direction.

8.  The semi-finished lens according to any one of claims 1 to 7,
    wherein curvature in a vertical direction of the optical region is larger than curvature in a vertical direction of the non-optical region.

9.  The semi-finished lens according to any one of claims 1 to 8,
    wherein curvature in a vertical direction of the non-optical region is different from curvature in a horizontal direction of the non-optical region.

10. The semi-finished lens according to any one of claims 1 to 9,
    wherein curvature in a horizontal direction of the non-optical region is larger than curvature in a vertical direction of the non-optical region.

11. The semi-finished lens according to any one of claims 1 to 10,
    wherein the shape of the optical region is set according to the shape of a frame.

12. The semi-finished lens according to any one of claims 1 to 11,
    wherein a material of the semi-finished lens is plastic.

13. A method for manufacturing an eyeglass lens having a lens power that corresponds to a prescription value of a lens, the method comprising:

    a step of preparing a semi-finished lens having an object-side surface and an eyeball-side surface; and
    a step of processing the eyeball-side surface of the semi-finished lens according to the prescription value of the lens,
    wherein the object-side surface of the semi-finished lens includes an optical region and a non-optical region that have different design shapes.

**FIG. 1**

**FIG. 2**

## FIG. 3

## FIG. 4

## FIG. 5

**FIG. 6**

**FIG. 7**

## FIG. 8

## FIG. 9

## FIG. 10

| | **INTERNATIONAL SEARCH REPORT** | International application No. |
|---|---|---|
| | | PCT/JP2020/044737 |

A.  CLASSIFICATION OF SUBJECT MATTER
G02C 7/02(2006.01)i
FI: G02C7/02

According to International Patent Classification (IPC) or to both national classification and IPC

B.  FIELDS SEARCHED

Minimum documentation searched (classification system followed by classification symbols)
G02C7/02

Documentation searched other than minimum documentation to the extent that such documents are included in the fields searched
　　　Published examined utility model applications of Japan　　　　1922–1996
　　　Published unexamined utility model applications of Japan　　　1971–2021
　　　Registered utility model specifications of Japan　　　　　　　1996–2021
　　　Published registered utility model applications of Japan　　　1994–2021

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2018-087925 A (TOKAI OPTICAL CO., LTD.) 07 June 2018 (2018-06-07) paragraphs [0017]-[0047], fig. 4-5, 14-15 | 1-6, 11-13 |
| Y | paragraphs [0017]-[0047], fig. 4-5, 14-15 | 7-10 |
| Y | JP 2014-002342 A (HOYA LENS MANUFACTURING PHILIPPINES INC.) 09 January 2014 (2014-01-09) claim 1 | 7-10 |
| Y | WO 2015/186767 A1 (HOYA LENS THAILAND LTD.) 10 December 2015 (2015-12-10) claims | 7-10 |
| Y | WO 2015/186766 A1 (HOYA LENS THAILAND LTD.) 10 December 2015 (2015-12-10) claims | 7-10 |
| A | US 2015/0115486 A1 (CARL ZEISS VISION INTERNATIONAL GMBH) 30 April 2015 (2015-04-30) the whole document, fig. 1-18 | 1-13 |

☐　Further documents are listed in the continuation of Box C.　　　☒　See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 　　09 February 2021 (09.02.2021) | 　　22 February 2021 (22.02.2021) |

| Name and mailing address of the ISA/ | Authorized officer |
|---|---|
| 　　Japan Patent Office | |
| 　　3-4-3, Kasumigaseki, Chiyoda-ku, | |
| 　　Tokyo 100-8915, Japan | Telephone No. |

Form PCT/ISA/210 (second sheet) (January 2015)

17

**INTERNATIONAL SEARCH REPORT**
Information on patent family members

| International application No. |
| --- |
| PCT/JP2020/044737 |

| Patent Documents referred in the Report | Publication Date | Patent Family | Publication Date |
| --- | --- | --- | --- |
| JP 2018-087925 A | 07 Jun. 2018 | (Family: none) | |
| JP 2014-002342 A | 09 Jan. 2014 | (Family: none) | |
| WO 2015/186767 A1 | 10 Dec. 2015 | US 2017/0082870 A1 claims EP 3153913 A1 CN 106461977 A | |
| WO 2015/186766 A1 | 10 Dec. 2015 | US 2017/0115510 A1 claims EP 3153914 A1 CN 106461976 A BR 112016028281 A | |
| US 2015/0115486 A1 | 30 Apr. 2015 | EP 2868461 A1 DE 102013222232 A1 CN 104760308 A IN 3138DE2014 A | |

Form PCT/ISA/210 (patent family annex) (January 2015)

**REFERENCES CITED IN THE DESCRIPTION**

**Patent documents cited in the description**

- JP 2012228806 A
- JP 2014182278 A

- JP 2019179219 A